# EUROPÄISCHE PATENTSCHRIFT

(11) **EP 3 921 819 B1**
(45) Veröffentlichungstag und Bekanntmachung des Hinweises auf die Patenterteilung: **29.05.2024**
(21) Anmeldenummer: 20700701.4
(22) Anmeldetag: 13.01.2020
(51) Int. Cl.: G08B 21/08, B63C 9/00

(54) **ÜBERWACHUNGSVORRICHTUNG UND VERFAHREN ZUR MAN-OVERBOARD-ÜBERWACHUNG EINES SCHIFFSABSCHNITTS**
MONITORING DEVICE AND METHOD FOR MONITORING A MAN-OVERBOARD EVENT IN A SHIP SECTION
DISPOSITIF DE SURVEILLANCE ET PROCÉDÉ DE SURVEILLANCE D'UNE PARTIE DE NAVIRE POUR LA DÉTECTION D'HOMME À LA MER

(30) Priorität: 06.02.2019 DE 102019201493
(43) Veröffentlichungstag der Anmeldung: 15.12.2021
(73) Patentinhaber: Robert Bosch GmbH, 70442 Stuttgart (DE)
(72) Erfinder: BOTHE, Hans-Dieter, 30926 Seelze (DE); FILLBRANDT, Holger, 31162 Bad Salzdetfurth (DE); MANGIAFICO, Gabriele, 20151 Milano (IT); SCARAVATI, Claudio, 20154 Milano (IT); RIBOLI, Stefano, 20084 Lacchiarella (IT); TERZON, Paolo Mario France, 20846 Macherio MB (IT); SCHUETTE, Sarah, 30519 Hannover (DE)
(86) Internationale Anmeldenummer: PCT/EP2020/050695
(87) Internationale Veröffentlichungsnummer: WO 2020/160875

(56) Entgegenhaltungen:
- WO-A1-2018/140549
- US-A1- 2017 154 223
- US-B2- 8 810 436

## Beschreibung

### Stand der Technik

Es wird eine Überwachungsvorrichtung zur Man-Overboard-Überwachung eines Schiffsabschnittes vorgeschlagen. Die Überwachungsvorrichtung weist mindestens eine Kamera zur videotechnischen Überwachung des Schiffsabschnitts auf. Eine Auswerteeinrichtung ist ausgebildet ein bewegendes Objekt zu detektieren und eine kinematische Größe zu bestimmen.

Auf Schiffen und insbesondere auf Passagierschiffen ist es ein bekanntes Problem, dass während der Fahrt unbemerkt Passagiere über Bord fallen können. Solche Ereignisse bezeichnet man als Man-Overboard-Ereignisse. Die Überlebenschancen bei einem solchen Ereignis sinken zunehmend mit der Zeit, die verstreicht, bis das Ereignis entdeckt wurde. Reedereien sind daran interessiert, solche Ereignisse schnellstmöglich bemerken zu können. Insbesondere existieren Regierungsvorschriften und/oder Auflagen von Versicherungen, die eine verstärkte Überwachung und verbesserte Detektion von solchen Ereignissen fordern. Auf Frachtschiffen wird eine solche Überwachung mittels Armbändern oder Transpondern realisiert.

Bei der videotechnischen Überwachung ist ein denkbares Problem, dass bewegende Objekte, wie beispielsweise Gischt, Vögel oder von Bord fallende Objekte fälschlicherweise als ein Man-Overboard-Ereignis detektiert werden. Daher ist es nötig, solche Falschdetektionen zu reduzieren, um die Fehlalarmrate zu verbessern. Beispielsweise fordert die ISO-Norm ISO/PAS 21195 "Ships and marine technology", dass Überwachungssysteme zur Man-Overboard-Überwachung eine Detektionsrate von größer 95 Prozent aufweisen und durchschnittlich weniger als einen Fehlalarm am Tag auslösen.

Die Druckschrift WO 2018/140549 A1 beschreibt ein Objekterkennungssystem mit mindestens einer Linienarray-Kamera zur Erfassung von Datensätzen innerhalb eines Sichtfelds jeweils unter Verwendung einer eindimensionalen Anordnung von Pixeln. Jeder Datensatz ist eine eindimensionale Ausgabe von der eindimensionalen Anordnung von Pixeln zu einem Zeitpunkt. Das Objekterkennungssystem umfasst ein Steuersystem zur Bestimmung, wann sich ein Objekt als Antwort auf die Datensätze durch ein Sichtfeld bewegt hat und ob das Objekt eine Person ist, die auf die Datensätze reagiert. Das Steuersystem setzt ein zweidimensionales Bild anhand mehrerer der eindimensionalen Datensätze des Objekts zusammen und erkennt, ob sich eine Person als Reaktion auf Variationen innerhalb jedes und zwischen jedem Datensätze durch ein Sichtfeld bewegt hat.

In der Druckschrift US 2017/0154223 A1 werden mindestens zwei gegenüberliegende Bildgebungsvorrichtungen zur Aufzeichnung von Videoströmen eines Erfassungsquaders innerhalb von überlappenden Bereichen bereitgestellt. Die Bildgebungsgeräte überwachen ein Man-Overboard-Ereignis, das durch den Erfassungsquader verläuft. Identifizierte Objekte in den Videostreams werden gepaart, ihre Konformität bestimmt und Informationen aus der realen Welt wie Größe, Flugbahn und Ort werden dreidimensional bestimmt. Zur dreidimensionalen Bestimmung werden xy-Koordinaten des Weltraums und ji-Koordinaten des Bildraums der mindestens zwei Bildgebungsvorrichtungen herangezogen.

### Offenbarung der Erfindung

Es wird eine Überwachungsvorrichtung mit den Merkmalen des Anspruchs 1 vorgeschlagen. Ferner wird ein Verfahren mit den Merkmalen des Anspruchs 14 vorgeschlagen. Bevorzugte und/oder vorteilhafte Ausführungsformen der Erfindung ergeben sich aus den Unteransprüchen, der Beschreibung und den beigefügten Figuren.

Es wird eine Überwachungsvorrichtung für ein Schiff, insbesondere ein Passagierschiff vorgeschlagen. Die Überwachungsvorrichtung ist ausgebildet das Überbord gehen von Personen als Man-Overboard-Ereignis (Mann-überBord-Ereignis) zu detektieren. Die Man-Overboard-Überwachung mittels der Überwachungsvorrichtung sieht beispielsweise vor, zu unterscheiden, ob ein Mensch über Bord gegangen ist oder ein anderweitiges Objekt. Der Schiffsabschnitt ist beispielsweise Teil eines Aufenthaltsbereichs des Schiffes, vorzugsweise ein Abschnitt, an dem eine Person über Bord gehen kann, und im Speziellen ein Bereich mit Reling. Ferner ist es vorzugsweise vorgesehen, dass der Schiffsabschnitt einen Überwachungsabschnitt bildet. Der Schiffsabschnitt umfasst ferner im Speziellen einen Teil des Meeres und/oder der Meeresoberfläche. Die Überwachungsvorrichtung kann zur Überwachung mehrere Schiffsabschnitte ausgebildet sein. Beispielsweise ist die Überwachungsvorrichtung ausgebildet, bei der Feststellung eines Man-Overboard-Ereignisses einen Alarm auszugeben.

Die Überwachungsvorrichtung weist mindestens eine Kamera auf. Die Kamera ist vorzugsweise als eine Farbkamera ausgebildet. Im Speziellen kann es vorgesehen sein, dass die Kamera oder mindestens eine Kamera als eine Infrarotkamera ausgebildet ist. Besonders bevorzugt ist es, dass jeder Schiffsabschnitt mit einem Paar aus Infrarot- und Farbkamera überwacht wird. Im Speziellen weist die Überwachungsvorrichtung eine Mehrzahl an Kameras auf, wobei die Kameras mehrere Schiffsabschnitte überwachen können, wobei die Schiffsabschnitte überlappend oder nicht überlappend angeordnet sein können. Besonders bevorzugt ist es, dass die Kamera seitlich, beispielsweise an einer Schiffsbordwand, montiert ist. Die Kamera überwacht den Schiffsabschnitt videotechnisch und/oder bildtechnisch. Dabei wird beispielsweise ein Bereich des Schiffes sowie ein dem Meer und/oder der Meeroberfläche zugewandter Außenbereich des Schiffes videotechnisch überwacht. Die videotechnische Überwachung wird von der und/oder den Kameras als Videodaten bereitgestellt.

Die Überwachungsvorrichtung weist eine Auswerteeinrichtung auf. Die Auswerteeinrichtung kann als ein Softwaremodul oder ein Hardwaremodul ausgebildet sein. Der Auswerteeinrichtung sind die Videodaten bereitgestellt. Die Auswerteeinrichtung weist eine Schnittstelle zur datentechnischen Kopplung mit der Kamera oder einer Mehrzahl an Kameras auf. Im Speziellen ist die Auswerteeinrichtung zur Bildauswertung ausgebildet.

Die Auswerteeinrichtung ist ausgebildet im Schiffsabschnitt ein sich bewegendes Objekt zu detektieren. Dazu vergleicht die Auswerteeinrichtung beispielsweise zeitlich aufeinander folgende und/oder beabstandete Bilder der Videodaten. Insbesondere ist die Auswerteeinrichtung ausgebildet das detektierte bewegende Objekt weiter zu verfolgen und/oder weiter auszuwerten. Die Auswerteeinrichtung ist ausgebildet, für das und/oder die detektierten bewegenden Objekte jeweils eine kinematische Größe zu bestimmen. Die kinematische Größe ist beispielsweise eine Geschwindigkeit des Objekts als Betrag oder als vektorielle Größe. Alternativ kann die kinematische Größe ein Pfad, ein Impuls oder eine Beschleunigung des bewegenden Objektes sein. Im Speziellen ist die Auswerteeinrichtung ausgebildet, für ein bewegendes Objekt eine Mehrzahl an kinematischen Größen zu bestimmen. Vorzugsweise bestimmt die Auswerteeinrichtung die kinematische Größe des bewegenden Objekts bis zu einem Stillstand oder Verschwinden des bewegenden Objekts.

Die Auswerteeinrichtung ist ausgebildet, basierend auf der kinetischen Größe des bewegenden Objektes eine Startposition zu bestimmen. Die Startposition ist eine Position und/oder Lage in drei Dimensionen. Die Startposition ist beispielsweise durch eine Koordinate in drei Dimensionen, insbesondere an der Position, für die die Auswerteeinrichtung die Bewegung erstmals feststellt. Die Auswerteeinrichtung kann beispielsweise die kinematische Größe unter Nutzung einer zu erwartenden kinematischen Größe in der Realität zusammen mit Abbildungsparametern die Starposition in drei Dimensionen bestimmen. Obwohl die Kamera keine Stereoaufnahmen macht, ist es durch Rückgriff auf Abbildungsparameter der Kamera, beispielsweise in Form von intrinsischen und/oder extrinsischen Kalibrierparameter, sowie der kinematischen Größe möglich eine 3D-Bestimmung zu machen. Beispielsweise indem basierend auf der kinematischen Größe und den Abbildungsparametern ein Abstand zur Kamera als Tiefeninformation bestimmt wird.

Die Erfindung sieht vor, dass die Auswerteeinrichtung ausgebildet ist, das bewegende Objekt als ein Man-Overboard--Ereignis auf Basis seiner Startposition zu bestimmen. Die Startposition ist insbesondere eine Lage und/oder Position in drei Dimensionen. Beispielsweise wird die Position in drei Dimensionen in Bezug auf die Kamera angegeben. Beispielsweise werden von der Auswerteeinrichtung nur bewegende Objekte als Man-Overboard-Ereignis gewertet, deren Startpositionen innerhalb eines Abschnitts, insbesondere innerhalb des Schiffs oder der Reling liegen. Startpositionen außerhalb des Schiffes werden beispielsweise als Gischt oder Vögel, bzw. nicht relevant gewertet.

Der Erfindung liegt die Überlegung zugrunde, bewegende Objekte als relevantes Ereignis basierend auf einer Position in einem dreidimensionalen Weltkoordinatensystem zu bestimmen, statt wie bisher, beschränkt auf zwei Dimensionen, Bewegungen auszuwerten. Im bisherigen Stand der Technik werden rein videobasierte Ansätze zwar als kostengünstig in der Installation dargestellt, allerdings sind die bildverarbeitenden Algorithmen bisher nicht so sensitiv und robust, dass Falschdetektionen unterdrückt werden. Insbesondere Witterungsbedingungen und Beleuchtungsszenarien sorgen für vermehrte Fehlalarme. Ferner erschwert die dynamische Szenerie mit viel Bewegung, beispielsweise durch Wellengang, Gischt, fahrende Objekte auf Wasser oder an Land, bewegende Personen an Bord, Vögel und andere Ereignisse die Anwendung von videobasierten Ansätzen. Durch die vorliegende Erfindung ist jedoch eine kostengünstige Möglichkeit und flexibel einsetzbare Überwachungsvorrichtung bereitgestellt, die eine hohe Zuverlässigkeit und Robustheit der automatischen Detektierung von Man-Overboard- Ereignissen mittels Videokameras ermöglicht. Insbesondere zeichnet sich die Überwachungsvorrichtung durch eine geringe Fehlalarmwahrscheinlichkeit aus.

Die Kamera weist insbesondere mindestens einen intrinsischen Kalibrierparameter und mindestens einen extrinsischen Kalibrierparameter auf. Im Speziellen weist die Kamera eine Mehrzahl an intrinsischen Kalibrierparametern und eine Mehrzahl an extrinsischen Kalibrierparametern auf. Die intrinsischen Kalibrierparameter sind insbesondere Kalibrierparameter, die von der Kamera selbst, insbesondere herstellungsbedingt, vorgegeben sind. Intrinsische Kalibrierparameter sind beispielsweise Abbildungsparameter der Kamera. Vorzugsweise sind intrinsische Kameraparameter Brennweite, Objektiveigenschaften und/oder Linsenverzeichnung der Kamera. Im Speziellen sind die intrinsischen Kalibrierparameter feste Parameter, die sich über die Lebenszeit und/oder Funktionszeit der Kamera und/oder der Überwachungsvorrichtung nicht oder nicht stark ändern. Beispielsweise können die intrinsischen Kalibrierparameter einmalig und/oder initial bei der Installierung der Überwachungsvorrichtung und/oder Kalibriereinrichtung und/oder Kamera festgelegt werden.

Als extrinsische Kalibrierparameter werden insbesondere Kameraparameter verstanden, die von einer Anordnung, Orientierung und/oder Montage der Kamera abhängig sind. Beispielsweise beschreiben extrinsische Kalibrierparameter den Sichtwinkel der Kamera bezüglich einer Horizontalen, einer Meeresoberfläche oder einer Schiffsebene. Im Speziellen bilden eine Montagehöhe der Kamera von einem Boden und/oder von der Meeresoberfläche eine extrinsische Kalibriergröße. Ferner kann der Montageabstand der Kamera von einer Schiffswand eine extrinsische Kalibriergröße bilden. Die Orientierung kann beispielsweise einen Neigungswinkel umfasst. Ferner können extrinsische Kalibrierparameter beispielsweise einen Abstand zu einem Fixpunkt und/oder Bezugspunkt beschreiben. Die extrinsischen Kalibrierparameter sind insbesondere montageabhängige Kalibrier- und/oder Kameraparameter. Die extrinsischen Kalibrierparameter werden durch die Montage und/oder Anordnung der Kamera vorzugsweise festgelegt und/oder können verändert werden durch eine Verschiebung, Änderung der Ausrichtung und/oder Demontage der Kamera. Insbesondere ist es möglich, basierend auf der Kenntnis der intrinsischen Kalibrierparameter und der extrinsischen Kalibrierparameter Abstände, Ausdehnungen, Orientierungen und/oder Positionen im Schiffsabschnitt zu bestimmen, insbesondere in drei Dimensionen.

Die Auswerteeinrichtung ist ausgebildet, basierend auf den Videodater jeder der mindestens einen Kamera, den intrinsischen und den extrinsischen Kalibrierparametern die kinematische Größe des bewegenden Objektes und seine Startposition zu bestimmen. Die Auswerteeinrichtung ist ausgebildet, mittels der Abbildungsparameter der Kamera die kinetische Größe mit einer physikalischen Größe in der realen Welt zu vergleichen und darauf basierend mittels der Videodaten die Starposition, und optional Abstände, Auflösungen und/oder Längen zu bestimmen. Beispielsweise ist die kinetische Größe eine Geschwindigkeit oder eine Beschleunigung, wobei ein zugehöriger Wert in der realen Wert, nämlich die Fallbeschleunigung bekannt ist und die Auswerteeinrichtung darauf basierend die Startposition des bewegenden Objektes bestimmt.

Eine Überlegung der Ausgestaltung ist es, unter Zuhilfenahme der Kamerakalibrierung die Trajektorie eines hypothetisch fallenden Objektes aus der zweidimensionalen Bildebene in ein geeignetes dreidimensionales Weltkoordinatensystem zu transformieren. Eine solche Transformation ist nur möglich, wenn zusätzlich zu den zweidimensionalen Bildkoordinaten die Position des Objekts in einer dritten Koordinate bekannt ist. Hierbei kann es sich beispielsweise um die Entfernung des Objektes von der Kamera handeln. Um diese Entfernungs-Information für das frei fallende Objekt zu erhalten, wird vorzugsweise zunächst die vertikale Beschleunigung des Objektes in Pixel pro Sekunde² bestimmt. Mit der bekannten Fallbeschleunigung von 9.81 m/s² erhält man so die Ortsauflösung des Objektes in Pixel pro Meter, die sich anhand der Brennweite der Kamera in die benötigte Distanz von der Kamera transformieren lässt.

Im Speziellen ist es vorgesehen, dass die Auswerteeinrichtung ausgebildet ist, basierend auf der kinematischen Größe eine Ausdehnung des bewegenden Objektes zu bestimmen, insbesondere eine Ausdehnung in der realen Welt. Beispielsweise ist die Ausdehnung ein Durchmesser oder ein Flächenmaß. Alternativ kann die Ausdehnung ein Volumenmaß bilden. Die Ausdehnung ist im Speziellen eine Länge, eine Breite oder ein Durchmesser des Objektes. Vorzugsweise ist die Ausdehnung die maximale Längserstreckung eines Objektes. Die Ausdehnung des Objektes wird insbesondere auf Basis der Videodaten und der kinematischen Größe bestimmt, insbesondere unter Kenntnis der Brennweite, extrinsischen und/oder intrinsischen Kalibrierparametern. Vorzugsweise wird von der Auswerteeinrichtung über die kinetische Größe und die Videodaten ein Maßstab, beispielsweise ein Abbildungsmaßstab, bestimmt, wobei basierend auf dem Maßstab die Ausdehnung des Objekts bestimmt wird. Im Speziellen wird basierend auf dem Maßstab das Objekt in den Videodaten vermessen und/oder bestimmt. Beispielsweise ist die Auswerteeinrichtung ausgebildet, die Videodaten und/oder die kinematische Größe des Objektes und/oder des Ereignisses, welches zum Objekt gehört, auszuwerten und auf die Möglichkeit eines Man-Overboard - Ereignisses zu untersuchen, wobei die Verifikation oder Ablehnung als Man-Overboard-Ereignis auf der Ausdehnung des Objektes basiert.

Beispielsweise ist die Auswerteeinrichtung ausgebildet, alle beschleunigten Bewegungen, insbesondere vertikal gerichteten und/oder zum Meer gerichteten beschleunigten Bewegungen, als mögliche Man-Overboard--Ereignisse zu bewerten, wobei der Ausschluss und/oder die Verifikation, ob es sich um ein wirkliches Man-Overboard-Ereignis handelt, auf Basis der Ausdehnung und/oder der Startposition bestimmt wird. Auf diese Art und Weise kann beispielsweise ausgeschlossen werden, dass ein herabfallender Gegenstand, beispielsweise eine Zigarette, fälschlicherweise als ein Man-Overboard-Ereignis detektiert wird.

Besonders bevorzugt ist es, dass die Überwachungsvorrichtung ein Klassifikationsmodul umfasst, wobei vorzugsweise das Klassifikationsmodul Teil der Auswerteeinrichtung ist. Das Klassifikationsmodul ist ausgebildet, für das bewegende Objekt eine Erscheinungsform zu bestimmen. Beispielsweise ist das Klassifikationsmodul ausgebildet, Bilder der Videodaten zu segmentieren und/oder Segmente eines segmentierten Bildes zu Klassen zusammenzufassen. Die Erscheinungsform ist beispielsweise eine geometrische Form, ein Farbverlauf, ein Kontrastverlauf und/oder optische Strukturen. Die Auswerteeinrichtung ist dann im Speziellen ausgebildet, das bewegende Objekt als Man-Overboard-Ereignis unter Zuhilfenahme der Erscheinungsform zu bewerten. Beispielweise werden Objekte mit falscher und/oder abweichender Erscheinungsform, insbesondere Form und/oder Farbe, als Fehlalarm und/oder nichtmenschliches Objekt, beispielsweise als Vogel oder Spritzwasser, gewertet. Besonders bevorzugt umfasst das Klassifikationsmodul eine künstliche Intelligenz, beispielsweise ein neuronales Netz. Das Klassifikationsmodul mit der künstlichen Intelligenz ist ausgebildet, mittels des Aussehens des detektierten fallenden Objektes zu entscheiden, ob es eher einer Person oder einem anderen typischen Fehlalarm-Objekt ähnelt.

Eine Ausgestaltung der Erfindung sieht vor, dass die Auswerteeinrichtung ausgebildet ist, für das bewegende Objekt basierend auf der kinematischen Größe und den Videodaten einen Endpunkt zu bestimmen. Der Endpunkt ist beispielweise der Aufschlagpunkt des Objektes im Meer. Alternativ und/oder ergänzend ist der Endpunkt der letzte Punkt für den eine Bewegung für das Objekt bestimmt wurde und/oder bestimmbar ist. Der Endpunkt wird von der Auswerteeinrichtung vorzugsweise als eine Position in drei Dimensionen bestimmt. Der Pfad und/oder die Trajektorie des bewegenden Objekts verläuft zwischen Startposition und Endpunkt. Die Auswerteeinrichtung ist ausgebildet, den Endpunkt bei der Bewertung des bewegenden Objektes als Man-Overboard-Ereignis einzubeziehen. Beispielweise werden Endpunkte die nicht auf der Meeresoberfläche liegen nicht als Man-Overboard-Ereignis gewertet.

Besonders bevorzugt umfasst die Auswerteeinrichtung eine künstliche Intelligenz. Beispielsweise umfasst die Auswerteeinrichtung ein neuronales Netz. Die Auswerteeinrichtung mit der künstlichen Intelligenz ist ausgebildet, bei der Bewertung des bewegenden Objekts als Man-Overboard-Ereignis zu lernen und/oder sich zu verbessern. Beispielsweise umfasst das Lernen die Bewertung und/oder das Heranziehen der Startposition, des Endpunkts, der Ausdehnung, der Erscheinungsform und/oder Kombinationen von diesen.

Insbesondere ist die von der Auswerteeinrichtung bestimmte kinematische Größe eine Fallbeschleunigung, wobei die Auswerteeinrichtung die Fallbeschleunigung in der Realität als Erdbeschleunigung als bekannt umfasst. Die Erdbeschleunigung wird auch als Referenzfallbeschleunigung bezeichnet. Die Auswerteeinrichtung ist dabei vorzugsweise ausgebildet, durch einen Vergleich der gemessenen Fallbeschleunigung in den Videodaten und der bekannten Erdbeschleunigung einen Maßstab, die Startposition, den Endpunkt und/oder die Ausdehnung des bewegenden Objektes zu bestimmen. Basierend auf der Brennweite, den intrinsischen und/oder extrinsischen Kalibrierparameter kann die Auswerteeinrichtung Trajektorie, Pfad, Startposition und/oder Endpunkt im Dreidimensionalen bestimmen.

Vorzugsweise weist die Überwachungsvorrichtung ein Auswahlmodul aus. Das Auswahlmodul ist als eine Mensch-Maschinen-Schnittstelle ausgebildet. Mittels des Auswahlmoduls kann ein Benutzer Daten eingeben, beispielsweise alpha-nummerisch oder graphisch. Vorzugsweise weist das Auswahlmodul eine graphische Anzeige auf, wobei zur Auswahl und/oder Eingabe auf der Anzeige beispielsweise die Videodaten angezeigt sind und/oder ein Modell des Schiffsabschnitts angezeigt ist. Mittels des Auswahlmoduls kann von dem Benutzer ein Gefahrenbereich ausgewählt und/oder festgelegt werden. Die Auswahl kann graphisch beispielsweise durch festlegen einer Fläche erfolgen und/oder mittels eines Polygonzuges und/oder mittels dreidimensionaler Maße, z.B. Abstand von der Schiffswand oder Höhe über der Wasseroberfläche, festgelegt werden. Der Gefahrenbereich ist insbesondere ein Bereich des Schiffes, in dem sich Personen aufhalten können und/oder die Gefahr eines Überbordgehens besteht. Das Auswertemodul ist im Speziellen ausgebildet, aus dem dreidimensionalen Gefahrenbereich und den Kalibrierparametern den möglichen zugehörigen Aufschlagsbereich zu berechnen. Der einem Gefahrenbereich zugeordnete Aufschlagsbereich ist vorzugsweise der Meeresabschnitt unterhalb des Gefahrenbereiches, in dem eine aus dem Gefahrenbereich über Bord gegangene Person die Wasseroberfläche trifft. Das Auswertemodul ist im Speziellen ausgebildet, basierend auf dem Gefahrbereich und/oder dem Aufschlagbereich das bewegende Objekt als Man-Overboard-Ereignis zu bewerten. Beispielsweise werden von der Auswerteeinrichtung nur bewegende Objekte als Man-Overboard-Ereignis gewertet, deren Startposition im Gefahrbereich liegt und/oder deren Endpunkt im zugehörigen Aufschlagbereich liegt.

Optional weist die Überwachungsvorrichtung ein Modellmodul auf, wobei das Modellmodul vorzugsweise Teil der Auswerteeinrichtung ist. Das Modellmodul umfasst ein Modell, insbesondere ein 3D-Modell und/oder CAD-Modell, des Schiffsabschnittes und/oder des Schiffs. Das Modell kann im Speziellen die Anordnung, Ausrichtung und/oder Abbildungsverhältnisse der Kamera umfassen. Das Modell ist beispielsweise auf der Anzeige des Auswahlmoduls anzeigbar, wobei der Benutzer den Gefahrbereich beispielsweise im Modell auswählt und/oder festlegen kann. Die Auswerteeinrichtung kann ausgebildet sein, bei der Bewertung des bewegenden Objektes, ob es sich um ein Man-Overboard-Ereignis handelt, das Modell hinzuziehen. Beispielsweise wird das Modell als Plausibilitätscheck herangezogen und/oder mittels des Modells Abstände, Kalibrierungen und/oder Größen verifiziert oder berechnet. Das Modell dient als Zusatzinformation bei Berechnungen und/oder Überprüfungen.

Insbesondere ist die Auswerteeinrichtung ausgebildet, für das bewegende Objekt eine Trajektorie zu bestimmen und/oder das bewegende Objekt zu tracken. Die Trajektorie wird vorzugsweise als der Pfad des bewegenden Objekts aufgefasst, wobei die Trajektorie zusätzlich Informationen wie Beschleunigungen und Geschwindigkeiten umfassen kann. Die Trajektorie eines im Schwerefeld der Erde frei fallenden Objektes beschreibt eine Parabel. Die Trajektorie kann von der Auswerteeinrichtung als eine Trajektorie in zwei oder drei Dimensionen bestimmt werden. Die Auswerteeinrichtung ist ausgebildet, bei der Bewertung des bewegenden Objektes, ob es sich um ein Man-Overboard-Ereignis handelt, die Trajektorie hinzuziehen. Beispielsweise werden müssen Man-ober-board-Ereignisse eine parabelförmige Trajektorie aufweisen.

Besonders bevorzugt es, dass die Videodaten monookulare Bilder umfassen. Die Kamera ist dabei beispielsweise als eine monookulare Kamera ausgebildet, insbesondere zur Aufnahme von Bildern ohne Tiefeninformation. Alternativ kann die Kamera eine Stereokamera und/oder eine biokulare Kamera bilden. Die Kamera kann insbesondere zoombar ausgebildet sein.

Im Speziellen weist die Kamera zwei Kameraeinheiten auf. Die beiden Kameraeinheiten bilden jeweils den gleichen Schiffsabschnitt ab. Eine der Kameraeinheiten ist vorzugsweise als eine Kameraeinheit zur Aufnahme von Bildern im sichtbaren Wellenlängenbereich des Lichts, wobei die andere Kameraeinheit als eine Kameraeinheit zur Aufnahme von Bildern im Infrarotbereich (FIR) und/oder im NIR-Bereich ausgebildet ist. Dieser Ausgestaltung liegt die Überlegung zu Grunde eine Robustifizierung der Überwachung zu ermöglichen, mittels der sowohl tagsüber als auch nachts eine Überwachung möglich ist.

Eine Ausgestaltung der Erfindung sieht vor, dass die Überwachungsvorrichtung eine Kalibrierungseinrichtung und ein Eingabemodul aufweist. Das Eingabemodul kann Teil der Kalibrierungseinrichtung sein. Das Eingabemodul ist insbesondere zur grafischen Eingabe ausgebildet. Mittels des Eingabemoduls können grafische Bereiche angezeigt, eingezeichnet und/oder ausgewählt werden. Insbesondere kann mittels des Eingabemoduls vorzugsweise eine nummerische oder alphanummerische Eingabe erfolgen. Beispielsweise ist das Eingabemodul als ein Touchscreen ausgebildet.

Mittels des Eingabemoduls kann ein Benutzer ein Kalibrierelement eingeben, auswählen, festlegen und/oder einzeichnen. Insbesondere ist durch den Benutzer eine Mehrzahl an Kalibrierelementen eingebbar. Als ein Kalibrierelement wird beispielsweise eine Information und/oder eine Struktur im Bild und/oder dem Schiffsabschnitt verstanden. Insbesondere ist es vorgesehen, dass der Benutzer und/oder die Kalibriereinrichtung Zusatzinformationen zum Kalibrierelement besitzt und/oder aufweist. Mittels dem Kalibrierelement sollen insbesondere Rückschlüsse auf Kalibrierparameter ermöglicht werden. Kalibrierelemente sind beispielsweise Linien, Flächen, Schnittbereiche, zweidimensionale oder dreidimensionale Objekte. Ein Kalibrierelement weist insbesondere eine Orientierung und/oder eine Ausdehnung auf. Die Ausdehnung ist beispielsweise eine Länge, eine Breite oder eine Tiefe. Die Orientierung des Kalibrierelements ist beispielsweise eine Richtung in einem Weltkoordinatensystem oder einem Bezugskoordinatensystem. Eine Orientierung kann insbesondere auch Winkel und/oder Orientierungen zueinander umfassen und/oder beschreiben. Beispielsweise kann ein Kalibrierelement eine Senkrechte auf eine Wasseroberfläche, eine Schiffsebene oder der Horizont sein. Kalibrierelemente können auch Winkelstellungen des Schiffskörpers sein, beispielsweise der Reling relativ zur Schiffsoberfläche und/oder dem Schiffsboden. Das Kalibrierelement kann beispielsweise manuell in Form von Linien, Punkten und/oder Polygonen festgelegt und/oder eingegeben werden. Insbesondere sind die Orientierung und/oder die Ausdehnung in Form von nummerischen Informationen durch den Benutzer mittels des Eingabemoduls eingebbar. Beispielsweise ordnet der Benutzer dem Kalibrierelement Längen, Winkel und/oder Orientierung nummerisch oder alpha-nummerisch zu. Ferner kann mit dem Eingabemodul von einem Benutzer Kalibrierparameter festgelegt und/oder eingestellt werden als bekannte Kalibrierparameter, beispielsweise durch Festlegen von Zahlenwerten.

Die Kalibriereinrichtung weist ein Auswertemodul auf. Das Auswertemodul kann insbesondere das Auswertemodul wie vorher beschrieben zur Eingabe sein. Das Auswertemodul bildet beispielsweise ein Softwaremodul oder ein Rechnermodul. Beispielsweise kann das Auswertemodul auf dem Eingabemodul ausgeführt sein und/oder mit diesem ein gemeinsames Modul bilden. Dem Auswertemodul sind das Kalibrierelement und/oder die Videodaten datentechnisch bereitgestellt. Ferner ist dem Auswertemodul bereitgestellt die Orientierung und/oder die Ausdehnung des Kalibrierelements. Insbesondere sind dem Auswertemodul auch bekannte Kalibrierparameter bereitgestellt. Das Auswertemodul ist ausgebildet, basierend dem Kalibrierelement, insbesondere der Orientierung und/oder der Ausdehnung des Kalibrierelements, und vorzugsweise auf den bekannten Kalibrierparametern, die unbekannten, extrinsischen und/oder intrinsischen Kalibrierparameter zu bestimmen. Beispielsweise erfolgt die Bestimmung der extrinsischen Kalibrierparameter einmalig bei Inbetriebnahme der Überwachungsvorrichtung oder regelmäßig, beispielsweise täglich oder wöchentlich. Im Speziellen ist das Auswertemodul ausgebildet, basierend auf den intrinsischen Kalibrierparametern, beispielsweise Brennweite und Linsenzeichnung, sowie der Orientierung und/oder Ausdehnung des Kalibrierelementes basierend auf den Videodaten und/oder der bildtechnischen Überwachung des Schiffsbereiches die Orientierung, Blickrichtung und/oder Montageanordnung der Kamera zu bestimmen. Das Kalibrierelement entspricht dabei insbesondere einem Element, einer Struktur und/oder realen Objekt im Schiffsabschnitt, der von der Kamera als Videodaten überwacht wird. Beispielsweise ist das Kalibrierelement eine sichtbare Linie im realen Schiffsabschnitt, welche eine festgelegte Länge aufweist. Diese Linie wird von der Kamera abgebildet, sodass das Auswertemodul basierend auf dem Abbild der Linie und der bekannten Länge und/oder Orientierung die extrinsischen Kalibrierparameter bestimmen kann. Die Bestimmung der extrinsischen Kalibrierparameter basiert vorzugsweise auf der Linsengleichung und/oder Abbildungsgleichung der Optik.

Es liegt die Überlegung zugrunde, dass bei der Überwachung eines Schiffsabschnitts mit Kameras zur Man-Overboard-Überwachung die Kameras besonders gut kalibriert sein müssen. Insbesondere ist es nötig, eine Orientierung und/oder die Abbildungsparameter der Kamera zu kennen, um so eine gute und sichere Überwachung mit wenig Fehlalarmen zu ermöglichen. Mittels der Kalibriereinrichtung kann von einem Benutzer ein Kalibrierelement optisch oder nummerisch festgelegt werden, welches sich in dem Schiffsbereich befindet, wobei ein Auswertemodul basierend auf dieser Auswahl die nötigen extrinsischen Kalibrierparameter bestimmt. Damit wird eine besonders leicht zu bedienende Kalibriereinrichtung bereitgestellt, welche eine sichere und genaue Kalibrierung der Überwachungsvorrichtung ermöglicht. Insbesondere lassen sich mittels der Kalibriereinrichtung eine Vielzahl an Kameras einer Überwachungsvorrichtung schnell und kostengünstig kalibrieren.

Einen weiteren Gegenstand der Erfindung bildet ein Verfahren zur Man-Overboard-Überwachung eines Schiffsabschnittes. Das Verfahren wird insbesondere mit der Überwachungsvorrichtung wie vorher beschrieben durchgeführt. Das Verfahren sieht vor, dass der Schiffsabschnitt videotechnisch überwacht wird und als Videodaten bereitgestellt werden. In den Videodaten wird ein bewegenden Objekt detektiert und für diese Objekt eine kinematische Größe bestimmt. Die kinematische Größe ist beispielsweise eine Beschleunigung oder Geschwindigkeit. Basierend auf Abbildungsparametern, extrinsischen und/oder intrinsischen Kalibrierparametern wird vorzugsweise eine Starposition im dreidimensionalen Raum bestimmt. Basierend auf der Startposition kann das bewegende Objekt als Man-Overboard-Ereignis gewertet oder verworfen werden.

Weitere Vorteile, Wirkungen und Ausgestaltungen ergeben sich aus den beigefügten Figuren und deren Beschreibung. Dabei zeigen:
Figur 1 schematisch eine Überwachungsvorrichtung mit einer Kalibriereinrichtung;
Figur 2 eine Aufnahme des Schiffsabschnitts mit einem Kalibrierelement;
Figur 3 eine weitere Aufnahme mit einem alternativen Kalibrierelement;
Figur 4 ein Bild des Schiffsabschnitts mit festgelegten Gefahrbereichen.

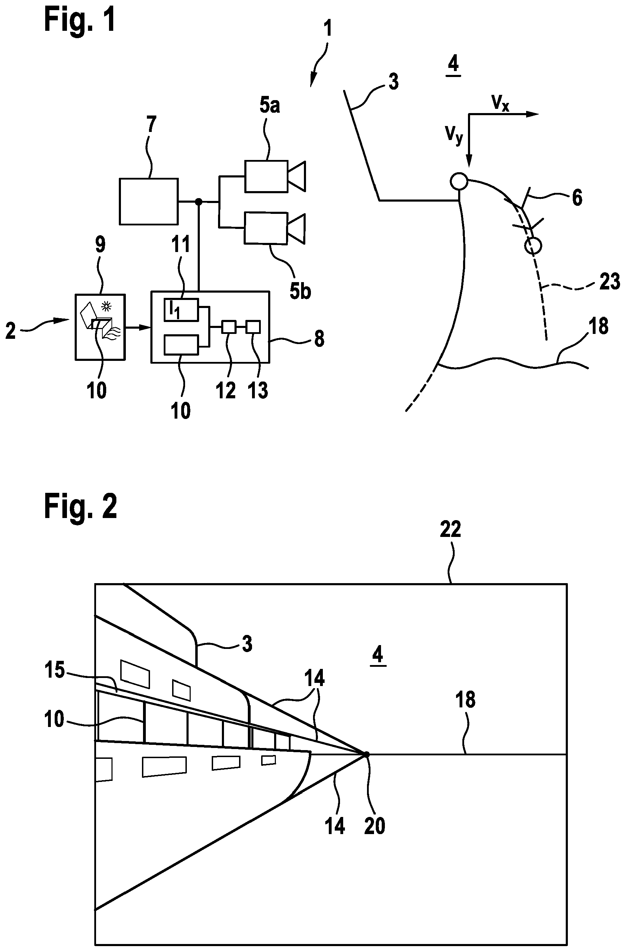

Figur 1 zeigt eine Überwachungsvorrichtung 1 mit einer Kalibriereinrichtung 2. Die Überwachungsvorrichtung 1 ist zur Überwachung eines Schiffs 3 ausgebildet. Mittels der Überwachungsvorrichtung 1 wird ein Schiffsabschnitt 4 des Schiffs 3 videotechnisch überwacht. Die Überwachungsvorrichtung 1 weist zwei Kameras 5a und 5b auf. Die Kamera 5a ist als eine Kamera zur Aufnahme von Bildern im visuellen Bereich ausgebildet, wobei die Kamera 5b eine Infrarotkamera bildet und Aufnahmen auch bei Dunkelheit aufnehmen und/oder erstellen kann. Die Kameras 5a und 5b sind auf den Schiffsabschnitt 4 gerichtet und bilden diesen video- und/oder bildtechnisch ab. Die Aufnahmen werden als Videodaten der Kalibriereinrichtung 2 bereitgestellt. Mittels der Überwachungsvorrichtung 1 erfolgt eine Man-Overboard-Überwachung im Schiffsabschnittes 4. Damit wird überwacht, ob eine Person über Bord geht und in Gefahr ist. Die Überwachungsvorrichtung 1 bestimmt dazu ein bewegendes Objekt im Schiffsabschnitt 4. Das bewegende Objekt kann beispielsweise eine Person 6 sein. Mittels der Überwachungsvorrichtung 1 erfolgt eine Unterscheidung, ob es sich bei dem bewegenden Objekt um eine Person 6 oder um einen anderweitigen Gegenstand wie beispielsweise Müll oder Wasser handelt. Nur, wenn das bewegende Objekt als eine fallende Person 6 charakterisiert wurde, erfolgt eine Alarmausgabe. Fallende Objekte wie Zigaretten oder ähnliches werden nicht als Man-Overboard-Ereignis gewertet, sodass keine Alarmgebung erfolgt.

Eine Person 6, die über Bord fällt, beschreibt eine parabelförmige Trajektorie. Die Person 6 und auch Objekte werden dabei mit der Erdbeschleunigung zum Meer beschleunigt. Etwaige horizontale Geschwindigkeiten durch den Sturz sind insbesondere nicht beschleunigt und/oder konstant. Die Trajektorie 23 kann durch Geschwindigkeiten vₓ und v_{y} beschrieben werden. Die Geschwindigkeit v_{y} stellt die beschleunigte Bewegung zur Meeresoberfläche dar, wobei die Geschwindigkeit vₓ eine konstante senkrechte Geschwindigkeit dazu ist. Die Person 6 und/oder das fallende Objekt weist eine Länge auf, welche beispielsweise als Durchmesser verstanden wird. Beispielsweise kann der Durchmesser und/oder die Länge auch dadurch bestimmt werden, dass dem fallenden Objekt ein Rechteck umschrieben wird, wobei der Durchmesser die Diagonale des Rechtecks beschreibt.

Die Videodaten sind der Auswerteeinrichtung 7 bereitgestellt. Die Auswerteeinrichtung 7 ist Teil der Überwachungsvorrichtung 1 und beispielsweise als ein Softwaremodul oder als eine Rechnereinheit ausgebildet. Eine Auswerteeinrichtung 7 kann insbesondere mit einer Mehrzahl an Kameras 5a und 5b verbunden sein. Basierend auf den Videodaten bestimmt das Auswerteeinrichtung 7, ob es sich bei dem bewegenden Objekt um eine Person 6 handelt. Insbesondere wird das bewegende Objekt von der Auswerteeinrichtung 7 getrackt, beispielsweise in aufeinanderfolgenden Bildern der Videodaten. Die Auswerteeinrichtung 7 ist ausgebildet, basierend auf den Videodaten für das bewegende Objekt eine kinematische Größe zu bestimmen. Die kinematische Größe ist beispielsweise ein Geschwindigkeitsprofil und/oder Beschleunigungswerte des bewegenden Objektes. Basierend auf der kinetischen Größe ist die Auswerteeinrichtung 7 ausgebildet, eine Größe und/oder eine Ausdehnung beziehungsweise den Durchmesser des bewegenden Objektes zu bestimmen. Beispielsweise nutzt die Auswerteeinrichtung 7 dazu die Fallbeschleunigung. Nachdem die Fallbeschleunigung beziehungsweise Erdbeschleunigung dem Zahlenwert nach bekannt ist, kann über einen Vergleich der verstreichenden Pixel pro Sekunde oder Pixel pro Quadratsekunde des bewegenden Objektes einem Pixel eine Größe zugeordnet werden. Durch das Bestimmen der Pixel entlang der Diagonale oder der Ausdehnung des bewegenden Objektes kann auf die Größe des bewegenden Objektes geschlossen werden. Entspricht die bestimmte Größe des bewegenden Objektes einer zu erwartenden Größe eines Menschen oder einer Person 6, wird bewertet, ob es sich um ein Man-Overboard-Ereignis oder nicht handelt.

Damit die Bestimmung der kinematischen Größe und/oder einer Ausdehnung des bewegenden Objektes möglich ist, muss die Überwachungsvorrichtung 1 und insbesondere die Kameras 5a und 5b kalibriert werden. Zur Kalibration dient das Festlegen und/oder Bestimmen der intrinsischen und extrinsischen Kalibrierparameter 11, 12.

Als extrinsische Kalibrierparameter 12 werden insbesondere Parameter aufgefasst, welche durch die Montage, Ausrichtung und/oder Entfernung der Kamera 5a oder 5b von dem Schiffsabschnitt 4 und/oder an dem Schiff 3 abhängig sind. Beispielsweise ist ein extrinsischer Kalibrierparameter 12 der Blickwinkel und/oder Neigungswinkel der Kamera 5a, 5b bezüglich einer Horizontalen und/oder der Wasseroberfläche. Als intrinsische Kalibrierparameter 11 werden Parameter der Kamera 5a, 5b verstanden, welche insbesondere von der Abbildungs- und/oder Abbildungsverhältnis der Kameras 5a, 5b abhängig sind. Beispielsweise sind intrinsische Kalibrierparameter 11 eine Linsenverzeichnung, eine Brennweite oder ein Blendendurchmesser. Die intrinsischen Kalibrierparameter 11 können insbesondere nummerisch eingestellt und/oder festgelegt werden. Diese können beispielsweise einem Produktdatenblatt der Kamera 5a, 5b entnommen sein. Die intrinsischen Kalibrierparameter 11 sind insbesondere zeitlich unabhängig und/oder konstant. Die extrinsischen Kalibrierparameter 12 können dagegen zeitlich veränderlich sein und müssen insbesondere nach der Installation der Kameras festgelegt und/oder bestimmt werden. Dazu umfasst die Überwachungsvorrichtung 1 die Kalibriereinrichtung 2.

Die Kalibriereinrichtung 2 weist ein Auswertemodul 8 und ein Eingabemodul 9 auf. Das Eingabemodul 9 ist datentechnisch mit dem Auswertemodul 8 verbunden. Das Auswertemodul 8 ist ausgebildet, dass ein Benutzer grafisch Daten eingeben kann. Beispielsweise weist das Eingabemodul 9 dazu eine Anzeige, beispielsweise Bildschirm, auf welchem ein Modell des Schiffs 3, des Schiffsabschnittes 4 oder die Videodaten angezeigt werden, auf. Der Benutzer kann mittels dem Eingabemodul 9 ein Kalibrierelement 10 auswählen. Beispielsweise zeichnet dazu der Benutzer Punkte und/oder eine Linie in die Videodaten ein. Das Kalibrierelement 10 ist ein geometrisches Objekt, welches insbesondere eine Orientierung und eine Länge aufweist. Ferner kann der Benutzer mittels dem Eingabemodul 9 dem Kalibrierelement 10 Maße zuordnen, beispielsweise wie die Länge.

Dem Auswertemodul 8 sind die Videodaten bereitgestellt. Ferner sind dem Auswertemodul 8 die intrinsischen Kalibrierparameter 11 bereitgestellt. Diese können beispielsweise von der Kamera 5a, 5b gesendet und/oder übermittelt worden sein. Alternativ können die intrinsischen Kalibrierparameter 11 dem Auswertemodul 8 durch Eingabe des Benutzers am Eingabemodul 9 bereitgestellt sein. Das Auswertemodul 8 ist ausgebildet, basierend auf den intrinsischen Kalibrierparametern 11, dem Kalibrierelement 10 und den Videodaten die extrinsischen Kalibrierparameter 12 zu bestimmen.

Bei dem Kalibrierelement 10 handelt es sich um eine Strukturinformation in den Videodaten. Beispielsweise ist das Kalibrierelement 10 als eine Fluchtlinie, als die Horizontlinie oder eine festgelegte Linie in den Videodaten ausgebildet. Auch können die Kalibrierelemente 10 bekannte Winkel auf dem Schiff 3 und/oder in dem Schiffsabschnitt 4 umfassen. Beispielsweise sind bekannte Winkel, dass ein Objekt senkrecht auf einem anderen steht. Insbesondere kann das Auswertemodul 8 ein Schiffsmodell 13 umfassen. Das Schiffsmodell 13 ist beispielsweise als ein 3D-Modell ausgebildet. Beispielsweise kann die Auswahl des Kalibrierelementes 10 auch in dem angezeigten 3D-Modell erfolgen. Das Auswertemodul 8 ist nun ausgebildet, basierend auf den Informationen des Kalibrierelementes 10, wie Position, Länge und/oder Orientierung und dem Vergleich, wie dieses Kalibrierelement 10 in den Videodaten erscheint, die extrinsischen Kalibrierparameter 12 wie beispielsweise die Orientierung und/oder Neigung des Blicks der Kamera 5a, 5b auf den Schiffsabschnitt 4 zu bestimmen. Die bestimmten extrinsischen Kalibrierparameter 12 werden datentechnisch insbesondere dem Auswertemodul 8 bereitgestellt.

Figur 2 zeigt schematisch ein Bild und/oder eine Abbildung 22 des Schiffsabschnittes 4 in den Videodaten. Der Schiffsabschnitt 4 und/oder dessen Abbildung zeigt das Schiff 3 aufgenommen aus der Perspektive der Kamera 5a. Ferner ist abgebildet der Horizont und/oder die Horizontlinie 18, welche von dem Meer und/oder der Meeroberfläche begrenzt ist. Durch die perspektivische Aufnahme der Kamera 5a weist das Bild Fluchtlinien 14 auf. Eine der Fluchtlinien 14 ist beispielsweise durch das Schiff 3 und/oder die Schiffswand definiert, welche auf den Horizont und/oder die Horizontlinie 18 zuläuft. Eine weitere Fluchtlinie 14 wird beispielsweise von der Reling 15 gebildet. Das Schiff 3 schwimmt auf dem Meer, sodass die Höhe des Schiffes 3 senkrecht auf dem Meer steht. Als Kalibrierelement 10 ist von dem Benutzer in dem Modell beispielsweise eine Strebe der Rehling 15 ausgewählt worden. Diese steht senkrecht auf dem Deck, wobei der Benutzer diese Information beispielsweise mittels dem Eingabemodul 9 eingeben und/oder hinterlegen kann. Das Kalibrierelement 10 weist insbesondere auch eine Länge und/oder eine Erstreckung auf, wobei die Länge hier beispielsweise zwei Meter ist. Die Information über die Erstreckung kann der Benutzer auch mit dem Eingabemodul 9 eingeben und/oder bereitstellen. Das Auswertemodul 8 ist nun ausgebildet, die Videodaten beispielsweise mit dem 3D-Modell zu vergleichen und insbesondere das Kalibrierelement 10 in den Videodaten zu suchen und/oder zu analysieren. Beispielsweise sucht das Auswertemodul 8 dieses Kalibrierelement 10 und ordnet diesem in den Videodaten und/oder Bildern eine Länge und Orientierung zu. Durch das Wissen der Länge und der Orientierung des Kalibrierelements 10 kann das Auswertemodul 8 nun die extrinsischen Kalibrierparameter beziehungsweise Kalibrierparameter bestimmen und dem Auswertemodul 8 bereitstellen.

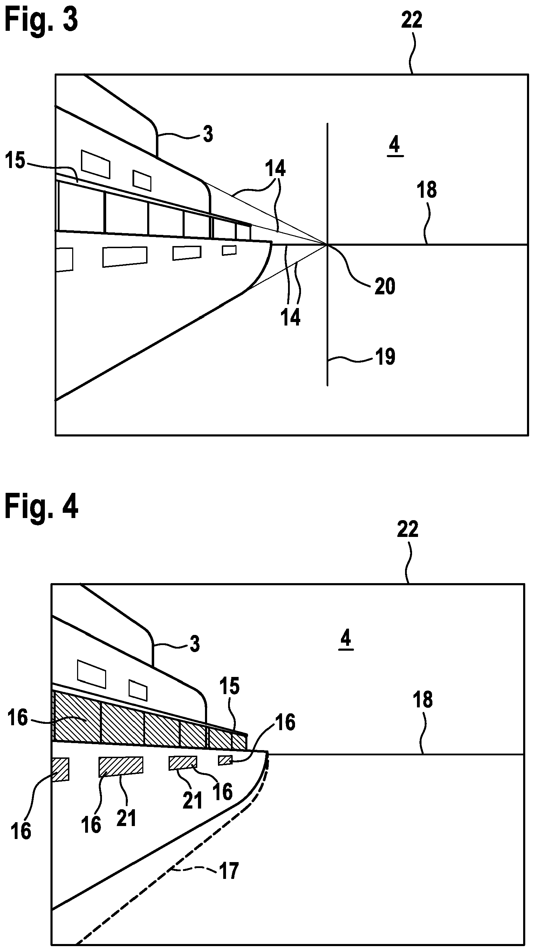

Figur 3 zeigt ein weiteres Beispiel einer Aufnahme 22 des Schiffsabschnitts 4 durch die Kamera 5a. In dem Bild ist eine Orientierung der Kamera 5a in Form eines kartesischen Koordinatensystems 19 vorgegeben und/oder eingezeichnet. Dieses ist beispielsweise festgelegt und/oder notwendig basierend auf der Linsenverzeichnung der Kamera 5a. In dem Bild ist wieder das Schiff 3 dargestellt, wobei dieses wieder auf den Horizont zu sich verschmälert. Die Fluchtlinien 14 sind beispielsweise durch eine Reling festgelegt und/oder durch den Benutzer eingestellt. Der Verlauf der Reling als Fluchtlinie 14 und dessen Stellung und/oder Winkeleinschluss mit dem kartesischen Koordinatensystem 19 kann zur Bestimmung der Orientierung, Lage und/oder Verdrehung der Kamera 5a bei der Aufnahme des Schiffsabschnittes 4 genommen werden. Diese Verdrehung und/oder Orientierung ist beispielsweise als extrinsische Kalibrierparameter 12 dem Auswertemodul 8 nach der Analyse bereitgestellt. Die Fluchtlinien 14 schneiden sich mit der Horizontlinie 18 im Fluchtpunkt 20.

Figur 4 zeigt eine Aufnahme 22 des Schiffsabschnitts 4 in Form eines Bildes, aufgenommen mit der Kamera 5a. Dieses Bild ist beispielsweise auf dem Eingabemodul 9 angezeichnet und/oder abgebildet. Der Benutzer kann in diesem Bild Bereiche festlegen, für die eine Überwachung und/oder Auswertung von bewegenden Objekten vorgesehen ist, wenn der Startpunkt der Bewegung des bewegenden Objektes in diesem Bereich liegt. Die so ausgewählten Bereiche bilden Gefahrbereiche 16. Die Gefahrbereiche 16 sind beispielsweise in Flächenform auswählbar und/oder eingebbar. Beispielsweise legt der Benutzer hierzu die Eckpunkte und/oder Randpunkte fest, wobei anschließend eine geschlossene Kontur gebildet wird, die als Gefahrbereich 16 hinterlegt wird. Der Gefahrbereich 16 kann beispielsweise auch bei Fensteröffnungen 21 liegen. Ferner kann der Benutzer Bereiche im Meer festlegen und/oder begrenzen, für die Personen und/oder gefallene Personen im Meer zu erwarten sind. Die so eingezeichnete Meerbegrenzungslinie 17 begrenzt die Auswertung von bewegenden Objekten durch die Überwachungsvorrichtung 1. Beispielsweise wird von dem Auswertemodul 8 ein bewegendes Objekt, das keinen Startpunkt in dem Gefahrbereich 16 hat, nicht als Man-Overboard-Ereignis aufgefasst. Ferner werden Objekte, deren Bewegung im Meer außerhalb der Meeresbegrenzungslinie 17 liegt, nicht als ein Man-Overboard-Ereignis verstanden. Dem Auswertemodul 8 ist es so möglich, Daten und Ressourcen schonend eine sichere Auswertung zu ermöglichen. Ferner werden Fehlalarme auch dadurch reduziert, dass uninteressante und/oder ausgeschlossene Bereiche von der Auswertung ausgeschlossen sind.

## Patentansprüche

1. Überwachungsvorrichtung (1) zur Man-Overboard-Überwachung eines Schiffsabschnitts (4),
wobei der Schiffsabschnitt (4) mittels mindestens einer Kamera (5a, 5b) videotechnisch überwacht ist, wobei die Kamera (5a, 5b) ausgebildet ist, die Überwachung als Videodaten bereitzustellen,
mit einer Auswerteeinrichtung (7), wobei die Auswerteeinrichtung (7) eine Schnittstelle zur Übernahme der Videodaten aufweist,
wobei die Auswerteeinrichtung (7) ausgebildet ist, basierend auf den Videodaten jeder einzelnen der mindestens einen Kamera ein bewegendes Objekt im Schiffsabschnitt (4) zu detektieren und eine kinematische Größe des bewegenden Objektes zu bestimmen,
wobei die Auswerteeinrichtung (7) ausgebildet ist, basierend auf den Videodaten und der kinematischen Größe des bewegenden Objektes einen Startpunkt in drei Dimensionen zu bestimmen und das bewegende Objekt als ein Man-Overboard-Ereignis auf Basis des Startpunkts zu bewerten,
wobei die Kamera (5a, 5b) intrinsische und extrinsische Kalibrierparameter (11, 12) als Abbildungsparameter der Kamera (5a, 5b) aufweist,
**dadurch gekennzeichnet, dass**
die Auswerteeinrichtung (7) ausgebildet ist, mittels der Abbildungsparameter der Kamera die kinematische Größe mit einer Fallbeschleunigung in der realen Welt zu vergleichen und darauf basierend mittels der Videodaten die Startposition des bewegenden Objektes ohne Stereoaufnahmen zu bestimmen.

2. Überwachungsvorrichtung (1) nach Anspruch 1, **dadurch gekennzeichnet, dass** die Auswerteeinrichtung (7) ausgebildet ist, basierend auf der kinematischen Größe eine Ausdehnung des bewegenden Objektes zu bestimmen und das bewegende Objekt als ein Man-Overboard-Ereignis auf Basis der Ausdehnung zu bewerten.

3. Überwachungsvorrichtung (1) nach einem der vorherigen Ansprüche, **gekennzeichnet durch** ein Klassifikationsmodul, wobei das Klassifikationsmodul ausgebildet ist dem bewegenden Objekt eine Erscheinungsform zuzuordnen, wobei die Auswerteeinrichtung (7) ausgebildet ist, basierend auf der Erscheinungsform das bewegende Objekt als Man- Overboard -Ereignis zu bewerten.

4. Überwachungsvorrichtung (1) nach einem der vorherigen Ansprüche, **dadurch gekennzeichnet, dass** die Auswerteeinrichtung (7) ausgebildet ist, für das bewegende Objekt einen Endpunkt zu bestimmen und basierend auf dem Endpunkt das bewegende Objekt als Man- Overboard -Ereignis zu bewerten.

5. Überwachungsvorrichtung (1) nach einem der vorherigen Ansprüche, **dadurch gekennzeichnet, dass** die Auswerteeinrichtung (7) als eine künstliche Intelligenz zum Lernen bezüglich der Erscheinungsform, Ausdehnung, Endpunkt und/oder Startposition ausgebildet ist.

6. Überwachungsvorrichtung (1) nach einem der vorherigen Ansprüche, **dadurch gekennzeichnet, dass** die Auswerteeinrichtung (7) ausgebildet ist, als kinematische Größe eine Fallbeschleunigung zu bestimmen und zur Bestimmung der Startposition und/oder der Ausdehnung die gemessene Fallbeschleunigung mit einer Referenzfallbeschleunigung zu vergleichen.

7. Überwachungsvorrichtung (1) nach einem der vorherigen Ansprüche, **gekennzeichnet durch** ein Auswahlmodul zur Auswahl von Gefahrbereichen (16), wobei die Auswerteeinrichtung (7) ausgebildet ist, basierend auf dem Gefahrbereich (16) und/oder dem daraus berechneten Aufschlagbereich das bewegende Objekt als Man-Overboard-Ereignis zu bewerten.

8. Überwachungsvorrichtung (1) nach einem der vorherigen Ansprüche, **gekennzeichnet durch** ein Modellmodul, wobei das Modellmodul ein 3D-Modell des Schiffsabschnittes (4) aufweist, wobei die Auswerteeinrichtung (7) ausgebildet ist, basierend auf dem 3D-Modell das bewegende Objekt als Man-Overboard -Ereignis zu bewerten.

9. Überwachungsvorrichtung (1) nach einem der vorherigen Ansprüche, **dadurch gekennzeichnet, dass** die Auswerteeinrichtung (7) ausgebildet ist, für das bewegende Objekt eine Trajektorie zu bestimmen und/oder das bewegende Objekt zu tracken, wobei die Auswerteeinrichtung (7) ausgebildet ist, basierend auf der Trajektorie das bewegende Objekt als Man- overboard -Ereignis zu bewerten.

10. Überwachungsvorrichtung (1) nach Anspruch 9, **dadurch gekennzeichnet, dass** die Auswerteeinrichtung (7) ausgebildet ist, die Trajektorie in ein 3D-Koordinatensystem zu projizieren.

11. Überwachungsvorrichtung (1) nach einem der vorherigen Ansprüche, **dadurch gekennzeichnet, dass** die Videodaten monookulare Bilder des Schiffsabschnittes (4) umfassen.

12. Überwachungsvorrichtung (1) nach einem der vorherigen Ansprüche, **dadurch gekennzeichnet, dass** die Kamera (5a, 5b) zwei Kameraeinheiten aufweist, wobei eine Kameraeinheit zur Aufnahme von Bildern im sichtbaren Bereich ausgebildet ist, wobei die andere Kameraeinheit zur Aufnahme von Bildern im Infrarotbereich ausgebildet ist.

13. Überwachungsvorrichtung (1) nach einem der vorherigen Ansprüche, **gekennzeichnet durch** eine Kalibrierungseinrichtung (2) und einem Eingabemodul (9) zur Eingabe eines Kalibrierelements (10), wobei die Kalibriereinrichtung (4), basierend auf dem Kalibrierelement (10), insbesondere einer Orientierung und/oder einer Ausdehnung des Kalibrierelements (10), verbleibende und/oder unbekannte Kalibrierparameter (11, 12) zu bestimmen.

14. Verfahren zur Man- Overboard -Überwachung eines Schiffsabschnittes (4) mit der Überwachungsvorrichtung (1) nach einem der vorherigen Ansprüche, wobei basierend auf einer kinematischen Größe eines bewegenden Objektes eine Startposition im dreidimensionalen Raum bestimmt wird, wobei basierend auf der Startposition auf das Vorliegen eines Man- Overboard-Ereignisses geschlossen wird.

## Claims

1. Monitoring device (1) for man-overboard monitoring of a ship section (4),
the ship section (4) being monitored using video technology by means of at least one camera (5a, 5b) and the camera (5a, 5b) being designed to provide the monitoring as video data,
comprising an evaluation device (7), the evaluation device (7) having an interface for receiving the video data,
the evaluation device (7) being designed to detect a moving object in the ship section (4) based on the video data of each individual one of the at least one camera and to determine a kinematic variable of the moving object,
the evaluation device (7) being designed to determine a starting point in three dimensions based on the video data and the kinematic variable of the moving object and to assess the moving object as a man-overboard event based on the starting point,
the camera (5a, 5b) having intrinsic and extrinsic calibration parameters (11, 12) as imaging parameters of the camera (5a, 5b),
**characterized in that**
the evaluation device (7) is designed to use the imaging parameters of the camera to compare the kinetic variable with a free-fall acceleration in the real world and, based on this, to determine the starting position of the moving object using the video data, without stereo recordings.

2. Monitoring device (1) according to Claim 1, **characterized in that** the evaluation device (7) is designed to determine an extension of the moving object based on the kinematic variable and to assess the moving object as a man-overboard event on the basis of the extension.

3. Monitoring device (1) according to any one of the preceding claims, **characterized by** a classification module, the classification module being designed to assign an appearance to the moving object, and the evaluation device (7) being designed to assess the moving object as a man-overboard event based on the appearance.

4. Monitoring device (1) according to any one of the preceding claims, **characterized in that** the evaluation device (7) is designed to determine an end point for the moving object and to assess the moving object as a man-overboard event based on the end point.

5. Monitoring device (1) according to any one of the preceding claims, **characterized in that** the evaluation device (7) is designed as an artificial intelligence system for learning with regard to the appearance, extension, end point and/or starting position.

6. Monitoring device (1) according to any one of the preceding claims, **characterized in that** the evaluation device (7) is designed to determine a free-fall acceleration as the kinematic variable and to compare the measured free-fall acceleration with a reference free-fall acceleration in order to determine the starting position and/or the extension.

7. Monitoring device (1) according to any one of the preceding claims, **characterized by** a selection module for selecting danger zones (16), the evaluation device (7) being designed to assess the moving object as a man-overboard event based on the danger zone (16) and/or the impact zone calculated from it.

8. Monitoring device (1) according to any one of the preceding claims, **characterized by** a modelling module, the modelling module comprising a 3D model of the ship section (4), and the evaluation device (7) being designed to assess the moving object as a man-overboard event based on the 3D model.

9. Monitoring device (1) according to any one of the preceding claims, **characterized in that** the evaluation device (7) is designed to determine a trajectory for the moving object and/or to track the moving object, and the evaluation device (7) being designed to assess the moving object as a man-overboard event based on the trajectory.

10. Monitoring device (1) according to Claim 9, **characterized in that** the evaluation device (7) is designed to project the trajectory into a 3D coordinate system.

11. Monitoring device (1) according to any one of the preceding claims, **characterized in that** the video data comprise monocular images of the ship section (4).

12. Monitoring device (1) according to any one of the preceding claims, **characterized in that** the camera (5a, 5b) comprises two camera units, one camera unit being designed to record images in the visible range, and the other camera unit being designed to record images in the infrared range.

13. Monitoring device (1) according to any one of the preceding claims, **characterized by** a calibration device (2) and an input module (9) for inputting a calibration element (10), the calibration device (4), to determine remaining and/or unknown calibration parameters (11, 12) based on the calibration element (10), in particular an orientation and/or an extension of the calibration element (10).

14. Method for man-overboard monitoring of a ship section (4) with the monitoring device (1) according to any one of the preceding claims, a starting position in three-dimensional space being determined based on a kinematic variable of a moving object, the occurrence of a man-overboard event being deduced based on the starting position.

## Revendications

1. Arrangement de surveillance (1) d'une portion de navire (4) pour la détection d'homme à la mer,
la portion de navire (4) étant surveillée par technique vidéo au moyen d'au moins une caméra (5a, 5b), la caméra (5a, 5b) étant configurée pour fournir la surveillance sous la forme de données vidéo,
comprenant un dispositif d'interprétation (7), le dispositif d'interprétation (7) possédant une interface servant à la prise en charge des données vidéo,
le dispositif d'interprétation (7) étant configuré pour, en se basant sur les données vidéo de chaque caméra individuelle de l'au moins une caméra, détecter un objet en mouvement dans la portion de navire (4) et déterminer une grandeur cinématique de l'objet en mouvement,
le dispositif d'interprétation (7) étant configuré pour, en se basant sur les données vidéo et la grandeur cinématique de l'objet en mouvement, déterminer un point de départ en trois dimensions et évaluer l'objet en mouvement comme un événement d'homme à la mer sur la base du point de départ,
la caméra (5a, 5b) possédant des paramètres d'étalonnage intrinsèques et extrinsèques (11, 12) en tant que paramètres de représentation de la caméra (5a, 5b),
**caractérisé en ce que**
le dispositif d'interprétation (7) est configuré pour, au moyen des paramètres de représentation de la caméra, comparer la grandeur cinématique à une accélération de chute dans le monde réel et, en se basant sur cela, déterminer au moyen des données vidéo la position de départ de l'objet en mouvement sans enregistrements stéréoscopiques.

2. Arrangement de surveillance (1) selon la revendication 1, **caractérisé en ce que** le dispositif d'interprétation (7) est configuré pour, sur la base de la grandeur cinématique, déterminer une étendue de l'objet en mouvement et pour évaluer l'objet en mouvement comme un événement d'homme à la mer sur la base de l'étendue.

3. Arrangement de surveillance (1) selon l'une des revendications précédentes, **caractérisé par** un module de classification, le module de classification étant configuré pour associer un aspect à l'objet en mouvement, le dispositif d'interprétation (7) étant configuré pour, en se basant sur l'aspect, évaluer l'objet en mouvement comme un événement d'homme à la mer.

4. Arrangement de surveillance (1) selon l'une des revendications précédentes, **caractérisé en ce que** le dispositif d'interprétation (7) est configuré pour déterminer un point final pour l'objet en mouvement et, sur la base du point final, évaluer l'objet en mouvement comme un événement d'homme à la mer.

5. Arrangement de surveillance (1) selon l'une des revendications précédentes, **caractérisé en ce que** le dispositif d'interprétation (7) est réalisé sous la forme d'une intelligence artificielle destinée à l'apprentissage concernant l'aspect, l'étendue, le point final et/ou la position de départ.

6. Arrangement de surveillance (1) selon l'une des revendications précédentes, **caractérisé en ce que** le dispositif d'interprétation (7) est configuré pour déterminer une accélération de chute en tant que grandeur cinématique et pour comparer l'accélération de chute mesurée à une accélération de chute de référence afin de déterminer la position de départ et/ou l'étendue.

7. Arrangement de surveillance (1) selon l'une des revendications précédentes, **caractérisé par** un module de sélection destiné à sélectionner des zones dangereuses (16), le dispositif d'interprétation (7) étant configuré pour, sur la base de la zone dangereuse (16) et/ou de la zone d'impact calculée à partir de celle-ci, évaluer l'objet en mouvement comme un événement d'homme à la mer.

8. Arrangement de surveillance (1) selon l'une des revendications précédentes, **caractérisé par** un module de modèle, le module de modèle possédant un modèle 3D de la portion de navire (4), le dispositif d'interprétation (7) étant conçu pour, sur la base du modèle 3D, évaluer l'objet en mouvement comme un événement d'homme à la mer.

9. Arrangement de surveillance (1) selon l'une des revendications précédentes, **caractérisé en ce que** le dispositif d'interprétation (7) est configuré pour déterminer une trajectoire pour l'objet en mouvement et/ou pour suivre l'objet en mouvement, le dispositif d'interprétation (7) étant configuré pour, en se basant sur la trajectoire, évaluer l'objet en mouvement comme un événement d'homme à la mer.

10. Arrangement de surveillance (1) selon la revendication 9, **caractérisé en ce que** le dispositif d'interprétation (7) est configuré pour projeter la trajectoire dans un système de coordonnées 3D.

11. Arrangement de surveillance (1) selon l'une des revendications précédentes, **caractérisé en ce que** les données vidéo comprennent des images monoculaires de la portion de navire (4).

12. Arrangement de surveillance (1) selon l'une des revendications précédentes, **caractérisé en ce que** la caméra (5a, 5b) comporte deux unités de caméra, une unité de caméra étant configurée pour enregistrer des images dans le domaine visible, l'autre unité de caméra étant configurée pour enregistrer des images dans le domaine infrarouge.

13. Arrangement de surveillance (1) selon l'une des revendications précédentes, **caractérisé par** un dispositif d'étalonnage (2) et un module d'entrée (9) destiné à l'entrée d'un élément d'étalonnage (10), le dispositif d'étalonnage (4), sur la base de l'élément d'étalonnage (10), notamment une orientation et/ou une étendue de l'élément d'étalonnage (10), des paramètres d'étalonnage (11, 12) restants et/ou inconnus pour déterminer.

14. Procédé de surveillance d'une portion de navire (4) pour la détection d'homme à la mer avec l'arrangement de surveillance (1) selon l'une des revendications précédentes, une position de départ dans l'espace tridimensionnel étant déterminée sur la base d'une grandeur cinématique d'un objet en mouvement, la présence d'un événement d'homme à la mer étant déduite sur la base de la position de départ.
